# DEMANDE DE BREVET EUROPEEN

(11) **EP 1 201 305 A2**
(43) Date de publication de la demande: **02.05.2002**
(21) Numéro de dépôt: 01204802.1
(22) Date de dépôt: 08.09.1999
(51) Int. Cl.: B01L 3/00

(54) **Système microfluidique de réactions et de transferts**

(30) Priorité: 08.09.1998 FR 9811383; 14.06.1999 FR 9907689
(62) Demande divisionnaire de: 99941720.7
(71) Demandeur: BIO MERIEUX, 69280 Marcy l'Etoile (FR)
(72) Inventeur: Colin, Bruno, 69280 Marcy L'Etoile (FR); Paris,Cécile, 69280 Marcy L'Etoile (FR); Dachaud, Jacques, 25000 Besancon (FR); Imbaud, Pierre, 69480 Pommiers (FR)
(74) Mandataire: Guerre, Dominique

(57) **Abrégé**

Dispositif (1), permettant de conduire une réaction ou au moins deux réactions en parallèle ou en série en son sein, qui est constitué par :
- une surface supérieure et une surface inférieure reliées l'une à l'autre par un bord,
- au moins un canal (5) dans lequel un flux fluidique peut être créé par des moyens de transfert pour permettre le transfert d'au moins un échantillon à traiter et/ou à analyser, et
- au moins une vanne (38) incorporée à chaque canal (5) permettant l'orientation de chaque échantillon et donc le contrôle des transferts, des réactions et des analyses dans le dispositif (1),
chaque vanne (38) est constituée de deux moyens (39 et 40, 50, 60 ou 70) solidaires du dispositif (1), le premier moyen (39) étant mobile entre une position de repos où le transfert de fluide est possible et une position active où ledit transfert est impossible, et le second moyen (40, 50, 60 ou 70) étant mobile entre une position de repos où il (40, 50, 60 ou 70) n'est pas en contact avec ledit premier moyen (39) et une position active où il déforme le premier moyen (39), pour que le transfert soit impossible, ledit second moyen (40, 50, 60 ou 70) est activé par un actionneur extérieur au dispositif (1), qui agit uniquement lors du maintien du second moyen (50, 60 ou 70) dans sa position de repos ou lors du maintien du second moyen dans sa position active.

## Description

La présente invention concerne un dispositif ou consommable, par exemple constitué par une carte, permettant de conduire une réaction ou au moins deux réactions parallèlement en son sein, qui est constituée par une surface supérieure et une surface inférieure reliées l'une à l'autre par un bord. Chacune des réactions, isolées physiquement l'une de l'autre, s'effectue dans au moins un canal indépendant dans lequel un flux fluidique peut être généré par des moyens de transfert.

L'invention concerne également un système de transfert d'un flux fluidique entre deux dispositifs ou cartes, ainsi qu'un procédé de transfert d'un tel flux fluidique entre deux dispositifs ou cartes, telles que décrites ci-dessus.

*L'état de la technique est constitué par le document US-A-4,106,675 qui propose un appareil de prélèvement d'un liquide ayant une section tubulaire constitué d'un matériau flexible, dans lequel le passage du liquide est possible. L'appareil possède également un moyen de contrôle du flux liquide constitué d'une soupape rigide positionnée dans le tube flexible. Ce tube est soudé sur le moyen de contrôle en position aval et épouse la forme dudit moyen en position amont. Lorsqu'un flux de liquide arrive sur le moyen de contrôle, il ne peut pas continuer son transit via ledit tube. De ce fait, le liquide va s'accumuler au niveau de la soudure, permettant le gonflement en amont du tube flexible, ce qui libère ainsi une ouverture latérale dudit moyen de contrôle par lequel le liquide peut poursuivre son transit.*

L'utilisation de tels dispositifs nécessite de créer une surpression au niveau du moyen de contrôle. Ceci rend la combinaison de plusieurs moyens de contrôle de ce type sur une seule carte impossible, sans le concours d'autres éléments d'ouverture et/ou de fermeture contrôlées des canaux.

*Le document US-A-4,585,623 a pour objet un appareil pour réaliser rapidement à un endroit unique des essais chimiques ou immunochimiques. Cet appareil comporte un corps en plastique moulé pouvant être miniaturisé, et présentant plusieurs tubes contenant des réactifs, un tube contenant l'échantillon et un tube de* *plus petite taille recevant la réaction. Chaque tube étant associé à un piston, il est possible d'insérer l'appareil dans un automate programmable.*

Cet appareil est relativement volumineux même si la miniaturisation est possible, car il faut prévoir la position dudit appareil ainsi que des différentes bielles qui vont permettre d'actionner les pistons. De plus, il n'est possible d'effectuer qu'une seule réaction avec un tel appareil, si plusieurs réactions doivent être réalisées, il faudra prévoir plusieurs appareils et également du temps pour charger ceux-ci avec les réactifs et échantillons adéquats.

*Le document WO-A-97*/*27324 concerne une cassette pour conduire en parallèle des réactions qui comporte une ouverture d'entrée et une ouverture de sortie pour le transfert du ou des échantillons à introduire dans la cassette. Certaines zones de la cassette sont de construction particulière (chambre de Bursapak, soupape à piston, valve à bille), elles permettent, sous l'action d'une force extérieure continue, de maintenir un canal fermé. Il s'agit de vannes qui sont constituées de deux parties ; il y a tout d'abord un film qui a une forme particulière et qui peut être déformé, et ensuite un plongeur pour fermer ou ouvrir la vanne par déformation du film.*

Toutefois, cette construction comporte de nombreux inconvénients. Les deux inconvénients principaux résident, d'une part, dans les risques de contamination interne de la cassette du fait que celle-ci est stockée avant son utilisation à la pression atmosphérique, et d'autre part, dans les moyens qui actionnent la cassette, au niveau des chambres de Bursapak, qui sont constituées par des soupapes à piston et des valves à bille, dont la présence est nécessaire, dans le temps et en intensité, pour maintenir les canaux concernés en position fermée. Or ces moyens d'actionnement ne font pas partie intégrante de ladite cassette, ils sont rapportés et non solidaires de la cassette et sont donc situés au niveau d'un appareil permettant de diriger les réactions au sein de la cassette. Cette contamination et/ou le non-maintien en position fermée desdits canaux peuvent entraîner des erreurs ultérieures lors de l'utilisation de la cassette. Ledit maintien en position fermée nécessite un appareillage lourd et onéreux qui rend le coût d'utilisation de telles cassettes prohibitif. Enfin, la forme très particulière du film entraîne des surcoûts de fabrication et de conditionnement.

*L'article de Shoji et al. « Prototype Miniature Blood gas analyser fabricated on a silicon wafer », publié dans SENSORS AND ACTUATORS (vol. 14, 24 octobre 1986 - 24 septembre 1987, pages 101-107), référence XP002101654, traite d'un petit appareil pour calculer le pH du sang. Essentiellement, cet appareil est équipé de micro-vannes. Il y a un premier et un second moyens constituant la vanne. Il s'agit d'un film et d'un cylindre de verre qui sont solidaires de l'appareil. La mise en action du cylindre de verre s'effectue par un ressort en alliage à mémoire de forme, qu'il est nécessaire d'actionner de l'extérieur par un courant électrique.*

Il y a donc nécessité de conserver l'alimentation électrique si l'on désire maintenir la micro-vanne dans sa position ouverte ou fermée. Avec l'invention de la demanderesse, une fois que l'actionneur extérieur a agi sur la vanne, l'actionneur n'est généralement plus utile.

*Le document US-A-3,881,513 propose un distributeur de liquides dans de nombreux canaux. Ce distributeur contient des sièges de vanne au niveau de chacun desquels est présent une bille. Cette bille, associée à la forme tronconique du siège auquel elle est associée, permet ou empêche le passage d'un fluide selon la direction de ce fluide.*

Il n'y a donc pas d'actionneur à proprement parler pour ce type de vanne à bille, qui joue plutôt le rôle d'une diode fluidique. La vanne, selon l'invention de la demanderesse, possède un actionneur constituant la vanne, solidaire du dispositif et qui active ou non la fermeture de ladite vanne en fonction de sa position.

*Le document EP-A-0.875.291 concerne une barrette contenant un certain nombre de cuvettes associées de façon linéaire. De toute ces cuvettes, les deux premières sont les plus intéressantes. Chaque chambre contient des réactifs utiles à une technique d'amplification, telle que la TMA. Un canal relie les deux cuvettes et comprend une vanne. Le mode de réalisation le plus intéressant consiste en un canal flexible comprenant une vanne constituée d'une bille scellée. Le déblocage de cette vanne peut être ainsi décrit par l'action de deux bras qui permettent la déformation du canal flexible et donc le déplacement de la bille vers un endroit où ledit canal est d'un diamètre plus important où la bille ne ferme plus ledit canal.*

Contrairement à cette invention, les vannes du dispositif selon l'invention sont actionnables une multitude de fois, car leur position ouverte ou fermée est réversible.

Conformément à la présente invention, le dispositif proposé solutionne l'ensemble des problèmes ci-dessus énumérés en proposant un consommable fiable et peu onéreux à mettre en oeuvre. Ainsi, les vannes sont entièrement solidaires du dispositif et l'activation ou la désactivation de celles-ci n'entraînent qu'une action ponctuelle ou très limitée dans le temps d'un actionneur extérieur. De plus, ces vannes sont actionnables de nombreuses fois.

A cet effet, la présente invention concerne un dispositif, permettant de conduire une réaction ou au moins deux réactions en parallèle ou en série en son sein, qui est constitué par :
- une surface supérieure et une surface inférieure reliées l'une à l'autre par un bord,
- au moins un canal dans lequel un flux fluidique peut être créé par des moyens de transfert pour permettre le transfert d'au moins un échantillon à traiter et/ou à analyser, et
- au moins une vanne incorporée à chaque canal permettant l'orientation de chaque échantillon et donc le contrôle des transferts, des réactions et des analyses dans le dispositif,
caractérisé par le fait que chaque vanne est constituée de deux moyens solidaires du dispositif, le premier moyen étant mobile entre une position de repos où le transfert de fluide est possible et une position active où ledit transfert est impossible, et le second moyen étant mobile entre une position de repos où il n'est pas en contact avec ledit premier moyen et une position active où il déforme le premier moyen, pour que le transfert soit impossible, et que ledit second moyen est activé par un actionneur extérieur au dispositif, qui agit uniquement lors du maintien du second moyen dans sa position de repos ou dans sa position active.

Les premier et second moyens sont positionnés au niveau d'une des surfaces du dispositif où le canal concerné est affleurant.

Plus précisément, les premier et second moyens sont positionnés dans le prolongement longitudinal de l'orifice de la partie du canal situé en amont ou en aval de la vanne.

D'autre part, le second moyen est mobile entre deux positions, une première position de repos où le transfert d'un fluide est possible, et une seconde position déformée et stable où il vient compresser le premier moyen au niveau du canal afin de le fermer.

Dans un mode particulièrement intéressant de réalisation, le premier moyen, qui peut être déformé, est constitué par un film flexible, tel que de l'élastomère, recouvrant en tout ou partie la surface supérieure ou la surface inférieure du dispositif.

Quel que soit le mode de réalisation, le second moyen est monobloc et actionnable de l'extérieur du dispositif.

Selon un mode particulièrement intéressant de réalisation, le second moyen de la vanne est constitué par deux bras reliés l'un à l'autre par un bras de liaison qui créent une agrafe en forme sensiblement de U, dont la gorge reçoit la carte.

Selon ce mode de réalisation, cette agrafe comporte un moyen d'actionnement de ladite agrafe.

Toujours selon ce mode de réalisation, ladite agrafe, mobile de manière réversible entre deux positions, une première position de repos où le transfert d'un fluide est possible, et une seconde position déformée et stable où il vient compresser le premier moyen au niveau du canal afin de le fermer, coopère avec des moyens de positionnement dans ses deux positions extrêmes.

Selon un dernier mode de réalisation, le second moyen est constitué par au moins une languette flexible fixée sur le dispositif.

Selon ce mode de réalisation, chaque languette comporte un moyen de fermeture/ouverture d'une vanne et un moyen d'actionnement de ladite languette de sa position de fermeture à sa position d'ouverture de la vanne et ce de manière réversible.

Le réseau de canaux est en dépression par rapport à l'environnement où est placé le dispositif, ce qui permet le transfert, au sein dudit réseau, d'au moins un échantillon à traiter et/ou à analyser par une ouverture d'entrée du dispositif, et chaque vanne incorporée audit dispositif permettant l'orientation de chaque échantillon transféré et donc le contrôle des réactions dans le dispositif.

Préférentiellement, lorsque le dispositif comporte au moins trois vannes, la distance séparant deux vannes adjacentes est constante et préférentiellement comprise entre 1 et 5 mm.

La présente invention concerne également un premier système de transfert d'un flux fluidique entre deux dispositifs, tels que décrits ci-dessus, qui est constitué par :
- un canal de transfert pour chaque dispositif constitué de deux portions, à savoir une première portion de grand diamètre, qui n'est pas en contact avec l'extérieur dudit dispositif et une seconde portion de petit diamètre, qui est en contact avec l'extérieur,
- une bille située dans la portion de petit diamètre de chaque canal de transfert, et
- un tube pouvant relier les portions de petit diamètre de deux dispositifs.

La présente invention concerne également un second système de transfert d'un flux fluidique entre deux dispositifs, tels que décrits ci-dessus, qui est constitué par :
- un canal traversant pour chaque dispositif constitué de deux portions, à savoir une première portion de grand diamètre, qui n'est pas en contact avec le canal en contact avec l'ouverture de sortie et donc avec l'extérieur dudit dispositif et une seconde portion de petit diamètre, qui est en contact avec ladite ouverture et donc avec l'extérieur,
- une bille située dans la portion de petit diamètre de chaque canal traversant, et
- un tube pouvant relier les portions de petit diamètre de deux dispositifs.

Quel que soit le système utilisé, le petit diamètre de chaque canal de transfert ou traversant est sensiblement identique ou inférieur au diamètre de chaque bille et au diamètre extérieur du tube, afin de créer une étanchéité avec l'extérieur de chaque dispositif individuel ou de deux dispositifs associés par le système de transfert.

Enfin la présente invention concerne un procédé de transfert d'un flux fluidique entre deux dispositifs, tels que décrits, utilisant un système, tel que décrit ci-dessus, qui consiste à :
- positionner chaque extrémité libre du tube au niveau de la seconde portion de petit diamètre du canal de transfert à l'encontre de la bille de chaque dispositif,
- rapprocher les deux dispositifs selon l'axe dudit tube, de sorte que le tube déplace chaque bille de la seconde portion de petit diamètre dudit canal de transfert ou traversant vers la première portion de grand diamètre du canal.

Les figures ci-jointes sont données à titre d'exemple explicatif et n'ont aucun caractère limitatif. Elles permettront de mieux comprendre l'invention.

La figure 1 représente une vue en coupe d'un premier mode de réalisation de l'invention, lorsque le premier moyen, qui peut être déformé, est en position de repos où le transfert d'un fluide est impossible.

La figure 2 représente une vue en coupe identique à la figure 1, lorsque le premier moyen est en position partiellement déformée sous l'action du second moyen où le transfert du fluide reste impossible.

La figure 3 représente une vue en coupe identique aux figures 1 et 2, lorsque le premier moyen, qui peut être déformé, et le second moyen actionneur sont en position de repos où le transfert d'un fluide est possible.

La figure 4 représente une vue en coupe identique aux figures 1 à 3, lorsque un troisième moyen est en position déformée sous l'action du quatrième moyen où le transfert du fluide redevient impossible. Il est à noter que le premier et le troisième moyens, d'une part, et le deuxième et le quatrième moyen, d'autre part, sont des équivalents techniques.

La figure 5 représente une vue schématique de deux dispositifs ou cartes telles que celles décrites aux figures précédentes, permettant la mise en oeuvre d'un système de transfert, selon la présente invention.

La figure 6 représente une vue identique à la figure 5, mais dans laquelle le tube pouvant relier les deux cartes est mis en place.

La figure 7 représente une vue identique à la figure 6, où les deux cartes sont rapprochées l'une de l'autre pour permettre le transfert.

La figure 8 représente une vue identique aux figures 6 et 7, après que le transfert ait été exécuté et les deux cartes à nouveau séparées.

La figure 9 représente une vue schématique d'une vanne en position fermée.

La figure 10 représente une vue schématique d'une vanne en position ouverte.

La figure 11 représente une vue en coupe selon C-C de la vanne présentée en figure 9.

La figure 12 représente une vue en coupe selon D-D de la vanne présentée en figure 10.

La figure 13 représente une vue en coupe identique à celle de la figure 12 selon un second mode de réalisation.

La figure 14 représente une vue en coupe d'un second mode de réalisation de deux dispositifs ou cartes telles que celles décrites aux figures précédentes, permettant la mise en oeuvre d'un système de transfert, selon la présente invention.

La figure 15 représente une vue en perspective d'une agrafe faisant office de second moyen d'actionnement selon un autre mode de réalisation de la présente invention.

La figure 16 représente une vue en perspective d'une carte d'analyse comportant un réseau de canaux dans lequel les fluides sont dirigés par l'intermédiaire de vannes équipées d'agrafes selon la figure 15.

La figure 17 représente une vue en coupe selon E-E de la figure 16, où l'agrafe ferme la vanne.

La figure 18 est identique à la figure 17, mais l'agrafe laisse la vanne ouverte.

La figure 19 représente une vue en élévation de la figure 16, dans laquelle deux des trois vannes représentées sont ouvertes.

La figure 20 représente une vue en coupe selon F-F de la figure 19.

La figure 21 représente une vue en perspective d'une agrafe selon un deuxième mode de réalisation de l'invention, ainsi qu'un actionneur adapté à cette agrafe.

La figure 22 représente une vue de côté d'une agrafe selon un troisième mode de réalisation de ladite invention.

La figure 23 représente une vue en perspective d'une carte d'analyse équipée de lamelles flexibles faisant office de second moyen d'actionnement selon encore un autre mode de réalisation de la présente invention.

La figure 24 représente une vue en perspective du dessous de l'une des lames flexibles présentées à la figure 23.

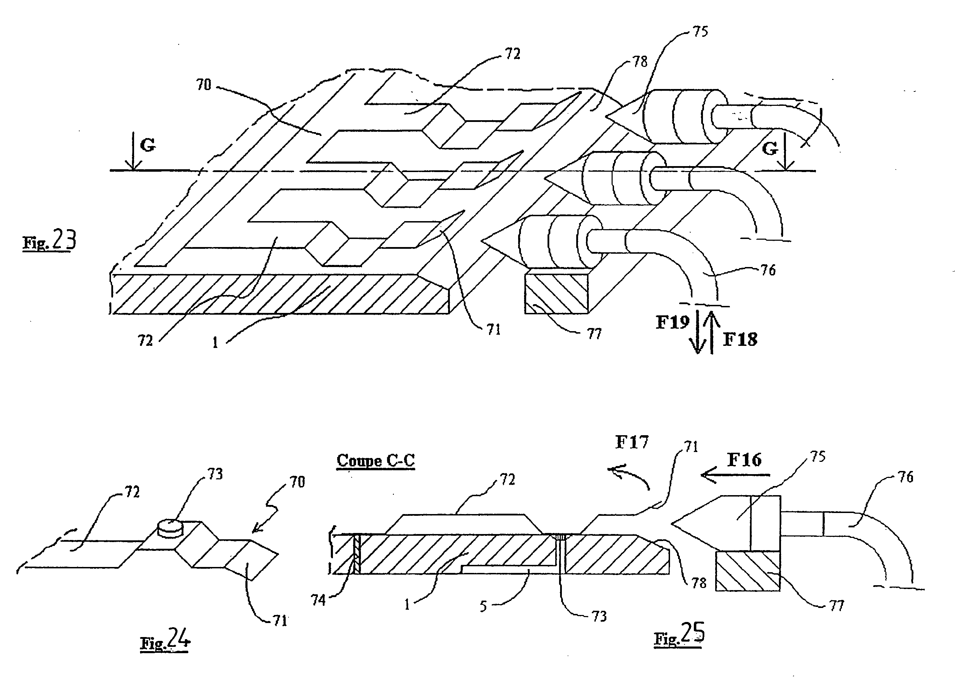

Enfin, la figure 25 représente une vue en coupe selon G-G de la figure 23.

La présente invention concerne un dispositif 1 constitué par une carte 1. Cette carte 1 est constituée par une surface supérieure et une surface inférieure. Entre ces deux surfaces, un rebord est présent qui relie lesdites surfaces. Cet ensemble constituant la carte 1 est pour l'essentiel constitué par un corps 23 situé en position sous-jacente, c'est-à-dire que le corps 23 constitue la surface inférieure et une partie du rebord.

Ledit corps 23 est parcouru de trous traversants 25 et de rainures 26 qui constituent ensemble un réseau de canaux 5. Sur la surface supérieure, est présent un film supérieur alors que sur la surface inférieure est présent un film inférieur. Bien entendu, cette disposition n'est pas obligatoire. De plus, les films peuvent être transparents ou opaques, par exemple en feuille d'aluminium. Quel que soit le mode de réalisation, lesdits films sont collés ou soudés sur le dispositif par tout mode de fixation.

Le réseau de canaux 5 permet le déplacement d'un échantillon ou de tout fluide qu'il soit gazeux ou liquide, référencé 6 sur les figures. L'échantillon va donc parcourir les canaux 5 et, selon l'ouverture ou la fermeture de vannes, incorporées à la carte 1, prendre une orientation ou une autre en fonction des canaux libres ou ouverts se présentant à lui.

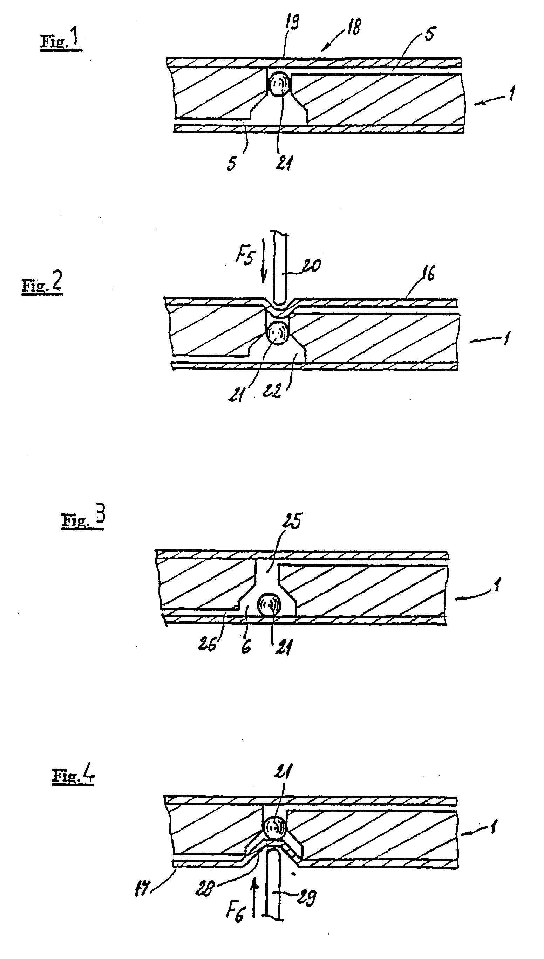

Selon un mode de réalisation représenté sur les figures 1 à 4, la vanne peut fonctionner selon un mode légèrement différent. Ainsi, les canaux 5 sont constitués des trous traversants 25 et des rainures 26. Le trou traversant 25 est en forme tronconique sur une partie de sa longueur. Cette forme tronconique fait office de dégagement pour une bille 21 située en son sein.

Dans le mode de réalisation représenté sur les figures, le dégagement a donc un diamètre supérieur et un diamètre inférieur du fait de sa forme tronconique. Le petit diamètre est en fait sensiblement identique ou inférieur au diamètre extérieur de la bille 21. De ce fait et comme on le voit bien sur la figure 1, la bille 21 peut venir épouser la forme de la partie du canal 5 de petit diamètre. Dans cette position, le canal 5 est bouché et le fluide 6 ne peut transiter.

Si le diamètre de la bille 21 est légèrement supérieur, le matériau constituant le corps 23 de la carte 1 est en un matériau qui se déforme sous la pression de ladite bille 21 et génère une étanchéité, c'est-à-dire que la bille 21 est maintenue en position stable dans un canal circulaire par serrage sur la totalité de sa circonférence, figure 11.

Cette situation définit la position « vanne fermée », figure 9.

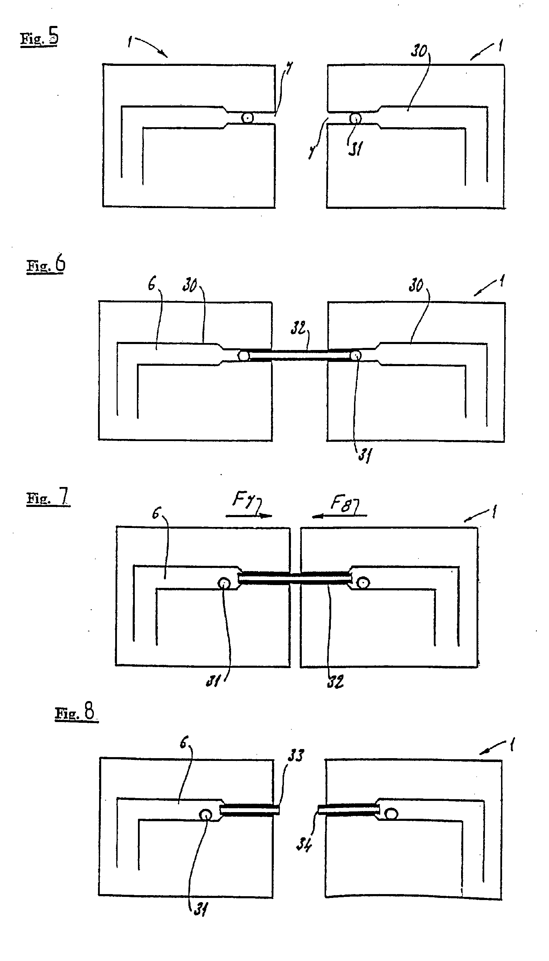

Afin de débloquer la situation et d'ouvrir la vanne, celle-ci comporte un premier moyen qui peut être déformé et qui est constitué sur les figures par un film supérieur souple. Au niveau du trou traversant 25 où est présent la bille 21, un second moyen 20 de la vanne, qui fait office d'actionneur, vient, d'une part, agir sur le premier moyen et, d'autre part, permettre l'évacuation de la bille 21 dans l'espace du canal 5 qui possède un diamètre plus important. De ce fait et comme cela est représenté à la figure 3, il sera possible pour le fluide 6 de transiter dans le canal 5.

En fait, la bille 21 est déplacée axialement dans un logement de plus grand diamètre, figure 12, ou de même diamètre mais ayant des dégagements, figure 13. Le jeu entre canal 5 et bille 21 est alors suffisant pour permettre le passage de fluide 6

Cette situation définit la position « vanne ouverte », figure 10.

Pour permettre le mouvement inverse, c'est-à-dire le mouvement de fermeture de la vanne, comme cela est représenté à la figure 4, il est possible d'avoir un mécanisme identique à celui représenté à la figure 2. Néanmoins celui-ci est utilisé sur l'autre face de ladite carte 1. Ce déplacement de la bille 21 s'effectue par un outillage externe ou non à la carte via la souplesse de film supérieur, qui constitue un troisième moyen pouvant être déformé. Ce troisième moyen coopère avec un quatrième moyen, qui fait office d'actionneur, et qui permet le positionnement à nouveau de la bille 21 au sein du canal 5, au niveau de son diamètre de petite dimension. Ceci rétablit la fermeture de ladite vanne comme cela était représentée sur la figure 1.

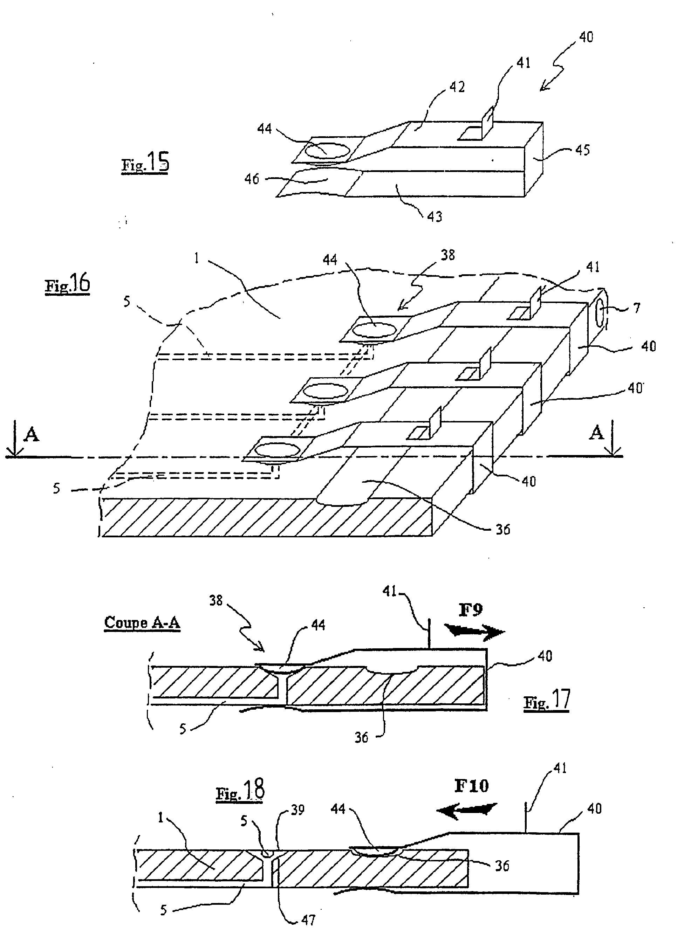

Trois autres modes de réalisation du second moyen constituant une vanne et pouvant déformer un film flexible 39 de structure semblable à celui exposé préalablement, sont représentés sur les figures 15 à 22. Ces trois modes de réalisation sont tous constitués par des agrafes.

Selon le premier mode de réalisation représenté à la figure 15, ce second moyen 40 est constitué par une agrafe qui fait office d'actionneur. Cette agrafe 40 est essentiellement constituée de deux bras parallèles sensiblement l'un à l'autre, un premier bras 42 en position supérieure et un second bras 43 en position inférieure sur cette figure. Les deux bras 42 et 43 sont reliés par l'une de leurs extrémités, l'un à l'autre, par un bras de liaison 45 qui est sensiblement perpendiculaire aux deux bras précités 42 et 43. L'extrémité libre et terminale des deux bras 42 et 43 est particulièrement adaptée au maintien en position de l'agrafe 40 sur la carte 1, puisque le premier bras 42 comporte un piston 44 et que le second bras 43 comporte un bossage d'appui 46. La distance séparant le piston 44 du bossage 46 est plus faible que la distance séparant les deux bras 42 et 43 au niveau du bras de liaison 45.

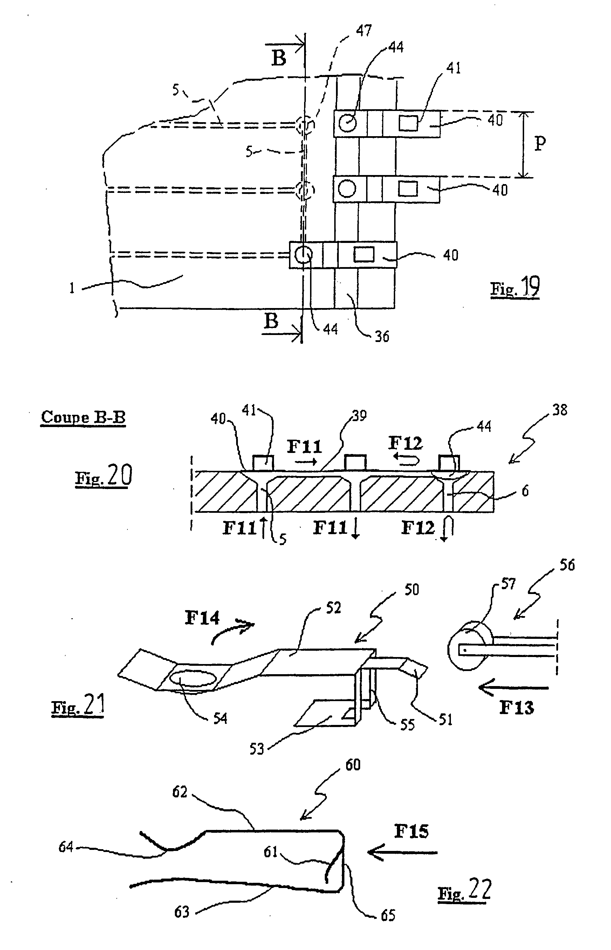

Comme on le remarque sur les figures 16 à 20, les agrafes 40 reçoivent en leur sein, la carte 1. De ce fait, la largeur de cette carte 1 est supérieure à l'écartement entre le piston 44 et le bossage d'appui 46 mais inférieure à la distance séparant les deux bras 42 et 43 au niveau du bras de liaison 45. L'agrafe est donc maintenue en position par l'élasticité du matériau constituant ladite agrafe 40, un tel matériau pouvant être constitué d'un métal ou d'un plastique.

Sur les figures 17 et 18, l'agrafe 40 est mobile entre deux positions, une position active où le piston 44 vient fermer la vanne 38 telle que représentée à la figure 17 et une position de repos où l'agrafe n'agit pas sur ladite vanne 38. Il est possible de passer de la position active à la position de repos selon F9 de la figure 17, et de la position de repos à la position active selon F10 de la figure 18. Pour ce faire, le premier bras 42 comporte une petite découpe en forme de U et un pliage de la partie interne de cette découpe afin de former un ergot d'actionnement 41 qui a une position sensiblement perpendiculaire au plan formé par le premier bras 42. Cet ergot 41 va pouvoir coopérer avec des moyens d'actionnement connus de tout homme du métier, comme par exemple des électro-aimants ou des systèmes de bielles ou de cames, permettant d'obtenir un mouvement de va-et-vient selon F9 et F10.

Si l'on se reporte maintenant aux figures 17 et 18 uniquement, on comprend mieux le mode de fonctionnement de la vanne 38. Cette vanne 38 est constituée par un canal 5 qui traverse la carte 1 mais dont la forme est évasée et constitue un siège 47 de ladite vanne 38 sur la partie supérieure de la carte 1, selon la représentation qui en est faite sur les figures. Au niveau de ce siège 47, est présent un autre canal longitudinal 5, en position perpendiculaire au précédent canal 5, dont on ne voit que la forme semi-circulaire sur la figure 18. Lorsque le piston 44 vient compresser le film flexible 39 au niveau du siège 47, on comprend aisément que le piston 44 empêche tout transfert de fluide 6 provenant des canaux 5. C'est d'ailleurs ce qui est bien représenté sur la figure 20 où le fluide 6 s'écoule aisément selon F11 et est refoulé selon F12 au niveau de la seule et unique vanne 38 fermée, c'est-à-dire la vanne située à droite de cette figure. Pour les autres positions, les agrafes 40 sont en position ouvertes si l'on se réfère également à la figure 19.

En fait en position de repos, l'agrafe 40 est en position décalée par rapport à la vanne 38, le piston 44 vient alors épouser la forme d'une rainure semi-circulaire 36 qui assure une position de repos stable à ladite agrafe 40.

Sur les figures 19 et 20, on comprend d'ailleurs qu'il y a deux canaux 5 d'arrivée situés de part et d'autre d'un canal 5 de départ aisé à visualiser en fonction des flèches F11 et F12. Les deux vannes 38 latérales permettent de commander l'arrivée ou non d'un fluide 6 contenu dans chacun de ces canaux 5 latéraux, alors que la vanne 38 centrale permet de commander ou non l'évacuation du mélange ou d'un des fluides 6 qui a été introduit et qui transite.

Sur les figures 16 et 19, les agrafes 40 sont espacées régulièrement les unes des autres. Il existe donc un pas entre deux agrafes adjacentes. Préférentiellement, ce pas peut reprendre des valeurs utilisées dans le domaine de l'électronique, c'est-à-dire 3,96 mm, 2,54 mm ou 1,28 mm. L'avantage de cette construction réside dans le fait que les actionneurs reprennent également ce pas, ce qui constitue un gage de fiabilité, de compétitivité et de flexibilité pour les appareils d'analyse ainsi équipés. De plus, les agrafes peuvent avantageusement être guidées dans une rainure pratiquée sur la surface inférieure de la carte garantissant ainsi un positionnement relatif précis entre le canal 5 et le piston 44.

Les figures 21 et 22 montrent deux autres modes de réalisation d'une agrafe semblable à l'agrafe 40.

Selon la figure 21, une agrafe 50 comporte deux bras parallèles l'un par rapport à l'autre, un premier bras 52 et un second bras 53. Néanmoins et a contrario du mode de réalisation précédent, le premier bras 52 se prolonge effectivement sous la forme d'un piston 54 alors que le second bras est tronqué. De ce fait, l'écartement entre les deux bras 52 et 53 correspond dans ce mode de réalisation exactement à l'épaisseur d'une carte 1. L'actionnement du piston 54 est effectué par l'intermédiaire d'une surface biseautée 51 qui permet la déformation du premier bras 52 par rapport au bras de liaison 55. Cet actionnement est effectué par l'intermédiaire d'un actionneur 56 qui comporte dans un mode particulier de réalisation une roulette 57 venant coopérer avec la surface biseautée 51. L'actionneur 56 est mû longitudinalement selon F13 ce qui induit, lors du contact entre la roulette 57 et la surface biseautée 51, un basculement selon F14 de l'extrémité libre du premier bras 52 et donc du piston 54.

Selon la figure 22, un dernier mode de réalisation d'une agrafe 60 est réalisé. Celui-ci est particulièrement simple puisque l'agrafe 60 est constituée par deux bras qui ne sont pas parallèles, un premier bras 62 sensiblement perpendiculaire au bras de liaison 65 et un second bras 63 qui est légèrement convexe par rapport à l'intérieur du premier bras 62. Ce dernier bras 62 comporte, à l'instar des modes de réalisation précédents, à son extrémité libre un piston 64. On remarque également qu'au niveau du bras de liaison 65 est présent une patte élastique 61 de rappel en position de l'agrafe 60. Celle-ci permet à ladite agrafe 60 d'avoir toujours une position de repos s'il n'y a pas d'action mécanique extérieure. Par contre, dès qu'un actionneur, non représenté sur cette figure mais bien connu de l'homme du métier, agit selon F15, la patte 61, qui est flexible, s'esquive et l'ensemble de l'agrafe 60 peut être déplacé de la même façon selon F15. Dans ce mode de réalisation, il est toutefois nécessaire lorsque l'on souhaite que la vanne ainsi créée reste fermée que l'actionneur soit toujours en contact avec ladite agrafe 60 pour maintenir l'agrafe en position active. Dès que cette force selon F15 n'est plus appliquée à l'agrafe 60, ladite patte 61 va reprendre sa position initiale et permettre le retour en position de ladite agrafe 60 et donc la libération des canaux 5 puisque le piston 64 est désengagé de la vanne qui avait été créée.

Bien entendu, ces modes de réalisation ne sont pas limitatifs et il est tout à fait imaginable que les positions de repos et active soient inversées sur la carte c'est-à-dire qu'il faille pousser pour désactiver une vanne si l'on se réfère au dernier mode de réalisation.

Selon un mode particulier de réalisation non représenté sur les figures, la carte 1 comporte des cloisons de séparation entre les agrafes 40, 50 et 60, dont les dimensions peuvent par exemple correspondre à la forme de chaque agrafe 40, 50 ou 60, lors de ses déplacements selon F9 et F10. De telles cloisons ne sont pas représentées sur ces figures.

Selon un dernier mode de réalisation de la présente invention, représenté sur les figures 23 à 25, le second moyen 70 d'une vanne est constitué par une lamelle en bande, ladite lamelle étant constituée d'un matériau élastique tel que métal ou plastique. Cette lamelle se prolonge longitudinalement le long des vannes. Perpendiculairement à cette lamelle en bande, est présent un certain nombre de languettes flexibles 72 qui constitue un élément essentiel du second moyen 70, la languette flexible 72 permettant de fermer ou d'ouvrir ladite vanne sous-jacente.

Comme on le remarque bien sur la vue en coupe selon G-G de la figure 23, c'est-à-dire en figure 25, la languette flexible 72 a une forme tout à fait particulière en ce sens qu'il y a deux points de contact entre celle-ci 72 et la carte 1. Tout d'abord en partie gauche de cette figure 25, est présent un picot de fixation 74 qui relie l'ensemble de la lamelle en bande à la carte 1, réalisant ainsi un point d'encastrement et de positionnement des languettes par rapport aux canaux de passage des vannes. D'autre part, il y a une zone située en vis-à-vis d'un canal 5, et donc de la vanne, qui est également en contact avec ladite carte 1. Cette zone comporte un moyen de fermeture/ouverture 73 constitué par un pion, formé directement dans la languette ou éventuellement, et avantageusement selon la nature de la membrane, rapporté sous forme d'un joint souple de type élastomère par exemple. Ce pion en élastomère 73 peut venir agir sur la membrane flexible sous-jacente fixée sur l'une des faces de la carte 1.

Entre ces deux zones situées au contact de la carte 1, la languette flexible et précontrainte 72 est éloignée de celle-ci 1 afin de permettre une flexibilité à ladite languette 72. De la même façon, à l'extrémité droite de la figure, la languette 72 se prolonge sous la forme d'un moyen d'actionnement 71 qui se trouve dans le prolongement de la partie intermédiaire décrite précédemment. Néanmoins, l'extrémité libre de ce moyen d'actionnement 71 est relevé afin de créer une surface en biseau 71 qui va pouvoir coopérer avec une surface biseautée 78 de ladite carte 1. Ainsi, les deux surfaces biseautées 71 et 78 sont en vis-à-vis et créent une forme géométrique sensiblement triangulaire dans laquelle un actionneur de type piston 75 peut être mû en translation selon F16 de la figure 25. On comprend bien que lorsque le piston 75 est mû selon F16 de la figure 25, l'ensemble de la languette flexible 72 est relevé selon F17 et le pion 73 n'est alors plus en contact avec le film flexible situé sur la vanne, permettant ainsi l'ouverture de ladite vanne.

Il y a comme on le voit sur la figure 23 autant d'actionneurs de type piston 75 que de languettes flexibles 72. De ce fait, l'ensemble des actionneurs 75 est monté sur un support 77, et chaque piston est alimenté en air comprimé selon F18 ou F19, selon que l'air entre ou sort de l'actionneur 75, par l'intermédiaire d'une durit 76. Ce mode de réalisation est particulièrement intéressant dans le sens où l'ensemble des seconds moyens de la vanne 70 peut être constitué à partir d'une seule pièce monobloc, préalablement formée (moulage ou découpe) et éventuellement pliée. De la même façon que précédemment, il est aisé de comprendre l'intérêt qu'il peut y avoir à disposer à la fois les languettes flexibles 72 et les actionneurs 75, selon un pas constant entre deux languettes 72 ou/et actionneurs 75 adjacents. La commande par air comprimé est un mode de réalisation parmi d'autres dispositifs connus tels que des électro-aimants.

Pour résumer, six modes de réalisation de vannes sont décrits et représentés sur les figures.

Le premier mode de réalisation de la vanne correspond aux figures 1 à 4, où le premier moyen est constitué par le film flexible 19 et où le second moyen est constitué par un actionneur 20 extérieur, l'action de cet actionneur 20 étant maintenue au sein de ladite vanne 18 par l'intermédiaire d'une bille 21, il s'agit de la seule fermeture indirecte de vanne décrite et représentée sur ces figures.

Le deuxième mode de réalisation de la vanne 38 correspond aux figures 15 à 20, où le premier moyen est constitué par le film flexible 39 et où le second moyen est constitué par une agrafe rapportée 40 mais dont l'action au niveau de ladite vanne 38 est constante selon la position de l'agrafe 40 par rapport au dispositif ou à la carte 1. Cette agrafe 40 est mue (F9 et F10) par un actionneur non représenté sur les figures, mais la position de ladite agrafe 40 est stable après chaque intervention de cet actionneur.

Le troisième mode de réalisation de la vanne correspond à la figure 21 associée aux figures 15 à 20, puisqu'il s'agit d'une agrafe 50 selon une deuxième structure, dont l'action est identique à l'agrafe 40 précédente. Cette agrafe 50 nécessite la présence constante d'un actionneur extérieur pour être maintenue dans la position vanne ouverte.

Le quatrième mode de réalisation de la vanne correspond à la figure 22 associée aux figures 15 à 20, puisqu'il s'agit d'une agrafe 60 selon une troisième structure, dont l'action est identique à l'agrafe 40 précédente. Contrairement à l'agrafe 50, la présence constante de l'actionneur extérieur est en relation avec la position vanne fermée.

Le cinquième mode de réalisation de la vanne correspond aux figures 23 à 26 associées aux figures 15 à 20, puisqu'il s'agit d'une agrafe 70, sous forme d'une languette flexible associée avec d'autres, selon une quatrième structure, dont l'action est identique à l'agrafe 40 précédente.

Le principe de la vanne a été repris pour permettre le transit de fluide 6 entre deux dispositifs ou cartes 1 de structures identiques ou différentes. Ainsi, il est bien compréhensible que toute carte 1, quelques soient les vannes qui la constituent, nécessite d'avoir une ouverture d'entrée 7 pour le fluide ou échantillon 6. Ainsi, cette ouverture 7 est constituée pour chaque carte 1 par un canal 30 qui a une structure sensiblement identique au canal traversant 25 représenté sur les figures 1 à 4.

Ce canal 30 comporte une première partie de petit diamètre, située au plus près de l'ouverture 7, et une seconde partie de grand diamètre, située au sein de ladite carte 1. En fait, le petit diamètre du canal 30 est sensiblement identique ou inférieur au diamètre extérieur d'une bille 31 présente en son sein.

Selon la figure 5, on comprend que les deux billes 31 vont empêcher la sortie du fluide 6, présent dans une des cartes, qui est destiné à transiter dans l'autre carte 1.

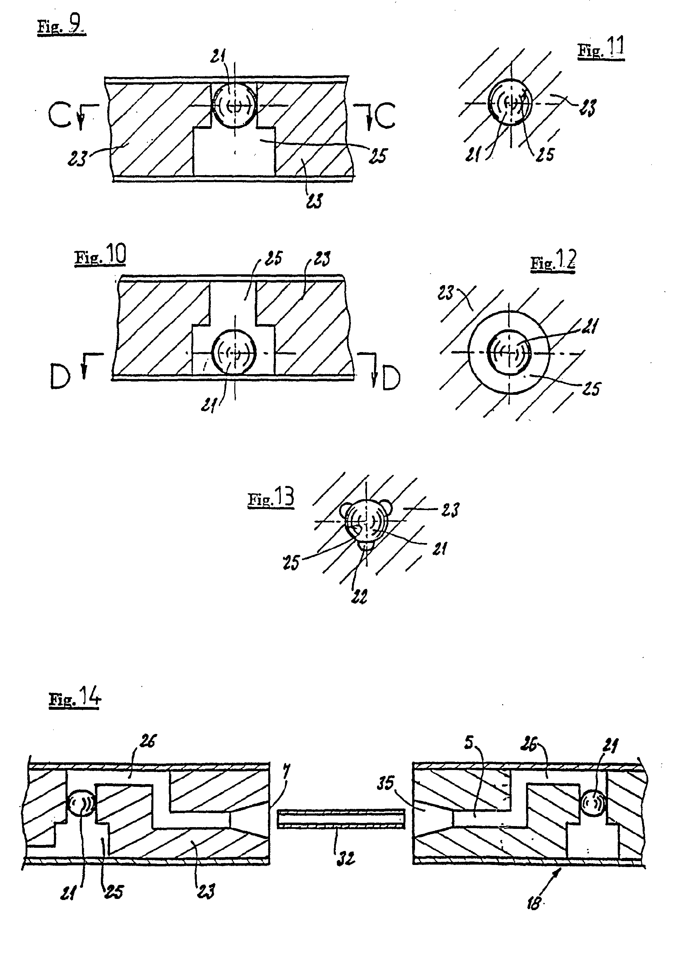

Pour permettre le transfert de l'échantillon 6, il est nécessaire d'utiliser un tube 32 qui va pousser chaque bille 31 en dehors du canal 30 de petit diamètre et évacuer chaque bille 31 au niveau du grand diamètre. Dans cette position représentée à la figure 7, les deux cartes 1 sont rapprochées selon F7 et F8 et le fluide 6 peut transiter entre les deux cartes 1. Dans ce cas, l'ouverture d'entrée 7 de l'une des deux cartes 1 fait office d'ouverture de sortie 7. Si l'on veut cesser le transit du fluide, il est nécessaire, comme représenté à la figure 8, d'utiliser, par exemple, un moyen de chauffage pour couper le tube 32 et créer ainsi deux demi tubes 33, qui sont chacun isolés de l'extérieur par un scellement 34 dû au chauffage du tube 32 et à sa fonte. Pour ce faire, il est nécessaire d'utiliser un tube 32 en une matière qu'il est possible de couper et fondre avec une simple source de chaleur.

On pourrait fermer les demi tubes 33 par un bouchon ou tout autre moyen.

Bien entendu, pour chaque carte 1, il est possible de prévoir un certain nombre d'ouverture d'entrée 7 pour permettre des transits avec plusieurs autres cartes 1.

Pour comprendre la façon dont le remplissage d'une carte 1 ou le transit d'une carte 1 remplie vers une carte 1 vide s'effectue, il faut comprendre que le réseau de canaux 5 est à une pression qui est inférieure à la pression ambiante de sorte que lorsque le réseau de canaux 5 est mis en contact avec un échantillon 6 situé à la pression ambiante, le transit s'effectuera automatiquement au sein de ladite carte 1.

Néanmoins, tout moyen de transfert connu de l'homme du métier et adapté aux conditions particulières, ci-dessus exposées, peut être utilisé.

Selon un autre mode de réalisation, représenté à la figure 14, le transfert de liquide peut être le suivant. Une carte 1 comporte une vanne en liaison directe avec une ouverture d'entrée 7. Cette vanne à bille 21 pourrait être constituée par une vanne avec élastomère. L'ouverture d'entrée 7 comporte un évidement en forme de tronc de cône. Il y aura donc un accouplement conique entre le tube cylindrique d'accouplement 32 et le cône d'étanchéité. Dans ce mode de réalisation, la manipulation des vannes s'effectue latéralement par rapport à la carte 1.

Avantageusement, ledit tube 32 peut être préalablement inséré dans une des deux cartes 1.

### REFERENCES

- 1.: Dispositif ou carte
- 5.: Canal
- 6.: Echantillon ou fluide
- 7.: Ouverture d'entrée ou de sortie de la carte 1
- 21.: Bille située dans le canal 5
- 23.: Corps de la carte 1
- 25.: Trous traversants constituant les canaux 5
- 26.: Rainures constituant les canaux 5
- 30.: Canal de transfert associé à l'ouverture 7
- 31.: Bille du canal 30
- 32.: Tube pour relier deux canaux 30
- 33.: Demi tube
- 34.: Scellement
- 35.: Cône d'étanchéité de l'ouverture d'entrée 7
- 36.: Rainure semi-circulaire
- 38.: Vanne incorporée à la carte 1
- 39.: Premier moyen de la vanne 38 qui peut être déformé ou film flexible
- 40.: Second moyen de la vanne 38 qui fait office d'actionneur ou agrafe
- 41.: Ergot d'actionnement de l'agrafe 40
- 42.: Premier bras de l'agrafe 40
- 43.: Second bras de l'agrafe 40
- 44.: Piston de l'agrafe 40
- 45.: Bras de liaison entre les premier et second bras 42 et 43
- 46.: Bossage d'appui du second bras 43
- 47.: Siège de la vanne 38
- 50.: Second moyen de la vanne 38 qui fait office d'actionneur ou agrafe
- 51.: Ergot d'actionnement de l'agrafe 50 ou surface biseautée
- 52.: Premier bras de l'agrafe 50
- 53.: Second bras de l'agrafe 50
- 54.: Piston de l'agrafe 50
- 55.: Bras de liaison entre les premier et second bras 52 et 53
- 56.: Actionneur de l'agrafe 50
- 57.: Roulette de l'actionneur 56
- 60.: Second moyen de la vanne 38 qui fait office d'actionneur ou agrafe
- 61.: Patte élastique de rappel en position de l'agrafe 60
- 62.: Premier bras de l'agrafe 60
- 63.: Second bras de l'agrafe 60
- 64.: Piston
- 65.: Bras de liaison
- 70.: Second moyen de la vanne qui fait office d'actionneur
- 71.: Moyen d'actionnement ou surface biseautée
- 72.: Languette flexible et précontrainte
- 73.: Moyen de fermeture/ouverture ou pion élastomère
- 74.: Picot de fixation
- 75.: Actionneur de type piston
- 76.: Durit pour air comprimé
- 77.: Support
- 78.: Surface biseautée de la carte 1
- F9.: Coulissement de l'agrafe 40 permettant l'ouverture de la vanne 38
- F10.: Coulissement de l'agrafe 40 permettant la fermeture de la vanne 38
- F11.: Flux fluidique lorsque le moyen 39 est au repos et le transfert est possible
- F12.: Flux fluidique lorsque le moyen 39 est déformée et le transfert est impossible
- F13.: Mouvement de l'actionneur 55
- F14.: Basculement du premier bras 52
- F15.: Poussée appliquée à l'agrafe 60
- F16.: Mouvement de l'actionneur 75
- F17.: Basculement de la languette 72
- F18 et F19.: Mouvements d'air comprimé
- P.: Pas entre deux agrafes 40, 50 et/ou 60 adjacentes

## Revendications

1. Dispositif (1), permettant de conduire une réaction ou au moins deux réactions en parallèle ou en série en son sein, qui est constitué par :
- une surface supérieure et une surface inférieure reliées l'une à l'autre par un bord,
- au moins un canal (5) dans lequel un flux fluidique peut être créé par des moyens de transfert pour permettre le transfert d'au moins un échantillon à traiter et/ou à analyser, et
- au moins une vanne (38) incorporée à chaque canal (5) permettant l'orientation de chaque échantillon et donc le contrôle des transferts, des réactions et des analyses dans le dispositif (1),
chaque vanne (38) est constituée de deux moyens (39 et 40, 50, 60 ou 70) solidaires du dispositif (1), le premier moyen (39) étant mobile entre une position de repos où le transfert de fluide est possible et une position active où ledit transfert est impossible, et le second moyen (40, 50, 60 ou 70) étant mobile entre une position de repos où il (40, 50, 60 ou 70) n'est pas en contact avec ledit premier moyen (39) et une position active où il déforme le premier moyen (39), pour que le transfert soit impossible, ledit second moyen (40, 50, 60 ou 70) est activé par un actionneur extérieur au dispositif (1), qui agit uniquement lors du maintien du second moyen (50, 60 ou 70) dans sa position de repos ou lors du maintien du second moyen dans sa position active.

2. Dispositif, selon la revendication 1, **caractérisé par le fait que** les premier et second moyens (39 et 40, 50, 60 ou 70) sont positionnés au niveau d'une des surfaces (2 ou 3) du dispositif (1) où le canal (5) concerné est affleurant.

3. Dispositif, selon l'une quelconque des revendications 1 ou 2, **caractérisé par le fait que** les premier et second moyens (39 et 40, 50, 60 ou 70) sont positionnés dans le prolongement longitudinal de l'orifice de la partie du canal (5) situé en amont ou en aval de la vanne (38).

4. Dispositif, selon l'une quelconque des revendications 1 à 3, **caractérisé par le fait que** le second moyen (40, 50, 60 ou 70) est mobile entre deux positions, une première position de repos où le transfert d'un fluide est possible, et une seconde position déformée et stable où il vient compresser le premier (39) au niveau du canal (5) afin de le fermer.

5. Dispositif, selon l'une quelconque des revendications 1 à 4, **caractérisé par le fait que** le premier moyen (39) est constitué par un film flexible (39), tel que de l'élastomère, recouvrant en tout ou partie la surface supérieure ou la surface inférieure du dispositif (1).

6. Dispositif, selon l'une quelconque des revendications 1 à 4, **caractérisé par le fait que** le second moyen (40, 50 ou 60) est constitué par deux bras (42 et 43, 52 et 53 ou 62 et 63) reliés l'un à l'autre par un bras de liaison (45, 55 ou 65) qui créent une agrafe (40, 50 ou 60) en forme sensiblement de U dont la gorge reçoit la carte (1).

7. Dispositif, selon la revendication 6, **caractérisé par le fait que** l'agrafe (40, 50 ou 60) comporte un moyen d'actionnement (41, 51 ou 61) de ladite agrafe (40, 50 ou 60).

8. Dispositif, selon l'une quelconque des revendications 6 ou 7, **caractérisé par le fait que** l'agrafe (40, 50 ou 60), mobile de manière réversible entre deux positions, une première position de repos où le transfert d'un fluide est possible, et une seconde position déformée et stable où il vient compresser le premier moyen (39) au niveau du canal (5) afin de le fermer, coopère avec des moyens de positionnement (47 et 36) dans ses deux positions extrêmes.

9. Dispositif, selon l'une quelconque des revendications 1 à 4, **caractérisé par le fait que** le second moyen (70) est constitué par au moins une languette flexible (72) fixée sur le dispositif (1).

10. Dispositif, selon la revendication 9, **caractérisé par le fait que** chaque languette (72) comporte un moyen de fermeture/ouverture (73) d'une vanne et un moyen d'actionnement (71) de ladite languette (72) de sa position de fermeture à sa position d'ouverture de la vanne et réversiblement.

11. Dispositif, selon l'une quelconque des revendications 1 à 10, **caractérisé par le fait que** le réseau de canaux (5) est en dépression par rapport à l'environnement où est placé le dispositif, ce qui permet le transfert, au sein du réseau (5), d'au moins un échantillon à traiter et/ou à analyser par une ouverture d'entrée du dispositif (1), et que chaque vanne (38) incorporée audit dispositif (1) permettant l'orientation de chaque échantillon (6) transféré et donc le contrôle des réactions dans le dispositif.

12. Dispositif, selon l'une quelconque des revendications 1 à 11, qui comporte au moins trois vannes (38), **caractérisé par le fait que** la distance séparant deux vannes (38) adjacentes est constante et préférentiellement comprise entre 1 et 5 mm.

13. Système de transfert d'un flux fluidique (6) entre deux dispositifs (1), chaque dispositif (1) selon l'une quelconque des revendications 1 à 12, **caractérisé par le fait qu'**il est constitué par :
- un canal de transfert (30) pour chaque dispositif (1) constitué de deux portions une première portion de grand diamètre, qui n'est pas en contact avec l'extérieur dudit dispositif (1) et une seconde portion de petit diamètre, qui est en contact avec l'extérieur,
- une bille (31) située dans la portion de petit diamètre de chaque canal de transfert (30), et
- un tube (32) pouvant relier les portions de petit diamètre de deux dispositifs (1).

14. Système de transfert d'un flux fluidique entre deux dispositifs (1), chaque dispositif (1) selon l'une quelconque des revendications 1 à 12, **caractérisé par le fait qu'**il est constitué par :
- un canal de traversant (25) pour chaque dispositif (1) constitué de deux portions une première portion de grand diamètre, qui n'est pas en contact avec le canal (5) en contact avec l'ouverture de sortie (7) et donc avec l'extérieur dudit dispositif (1) et une seconde portion de petit diamètre, qui est en contact avec ladite ouverture (7) et donc avec l'extérieur,
- une bille (21) située dans la portion de petit diamètre de chaque canal traversant (25), et
- un tube (32) pouvant relier les portions de petit diamètre de deux dispositifs (1).

15. Système, selon l'une quelconque des revendications 13 ou 14, **caractérisé par le fait que** le petit diamètre de chaque canal de transfert (30) ou traversant (25) est sensiblement identique ou inférieur au diamètre de chaque bille (31 ou 21) et au diamètre extérieur du tube (32), afin de créer une étanchéité avec l'extérieur de chaque dispositif (1) individuel ou de deux dispositifs (1) associés par le système de transfert.

16. Procédé de transfert d'un flux fluidique (6) entre deux dispositifs (1), selon l'une quelconque des revendications 1 à 12, utilisant un système selon l'une quelconque des revendications 13 à 15, **caractérisé en ce qu'**il consiste à :
- positionner chaque extrémité libre du tube (32) au niveau de la seconde portion de petit diamètre du canal de transfert à l'encontre de la bille (31) de chaque dispositif,
- rapprocher les deux dispositifs (1) selon l'axe dudit tube (32), de sorte que le tube (32) déplace chaque bille (31 ou 21) de la seconde portion de petit diamètre dudit canal de transfert (30) ou traversant (25) vers la première portion de grand diamètre du canal (30).
